# EUROPEAN PATENT SPECIFICATION

(11) **EP 0 808 409 B1**
(45) Date of publication and mention of the grant of the patent: **11.09.2002**
(21) Application number: 96903314.1
(22) Date of filing: 13.02.1996
(51) Int. Cl.: E21B 10/24

(54) **CUTTER FOR A BORING HEAD**
SCHNEIDELEMENT EINES BOHRKOPFES
TREPAN POUR TETE DE FORAGE

(30) Priority: 14.02.1995 SE 9500521
(43) Date of publication of application: 26.11.1997
(73) Proprietor: SANDVIK AKTIEBOLAG, 811 81 Sandviken (SE)
(72) Inventor: BROLUND, Stig-Ake, Houston, Texas 77095-4160 (US)
(86) International application number: SE9600185
(87) International publication number: WO96025581

(56) References cited:
- CH-A- 541 712
- GB-A- 2 173 531
- US-A- 3 419 093

## Description

### Prior art

The present invention relates to a cutter for a boring head, preferably a boring head for shaft drilling, wherein the cutter is rotatably mounted, via a shaft of the cutter, in a saddle secured to the boring head and wherein bearings are provided between the shaft and an outer roller body of the cutter to make it possible for the roller body to rotate relative to the shaft, wherein seals are disposed between the shaft and the roller body and channels/holes are provided to introduce lubrication into the bearings. The invention further relates to a method for filling a lubrication system.

When cutters of the type mentioned above are working it is necessary that the bearings are embedded in a lubricant, preferably grease, i.e. the space between the shaft and the cutter is filled with grease. This is done in order to minimize the friction when the roller body is rotated relative to the shaft. By having a low internal friction in the bearings, the life of the cutter is kept at an acceptable level. However, it has turned out that under very tough working conditions, i.e., when the cutter is subjected to a heavy load, much heat is generated by rotation of the roller body relative to the shaft and by friction as the cutter works the rock. Due to the heat generation the grease expands and the internal pressure of the cutter rises. Under such conditions it occasionally happens that the internal pressure of the cutter reaches a level where the seal means are not able to withstand said internal pressure, i.e., the seals collapse and the grease emerges from the bearings. It is readily understood that if the seals collapse then the cutter will rapidly breakdown.

From DE-PS 27 42 019 a cutter for a tunnel boring machine is previously known, the cutter being equipped with pressure relief valves connected to certain ends of the internal grease passages. Other ends of the internal grease passages are equipped with nipples for introducing grease into the internal grease passages. The function of the pressure relief valves is to allow passage of excessive grease both when grease is primarily introduced into the interior of the cutter as well as when regreasing of the cutter is effected. However, if the cutter according to DE-PS 27 42 019 is subjected to heavy loads and consequently a thermal expansion of the grease takes place, the pressure will increase until the pressure relief valves open. Thus, it is absolutely necessary that the valves function properly to avoid damages primarily to the seals and subsequently to the bearings. It is well known that the working conditions of cutters are extremely tough and that a considerable amount of dirt/cuttings adhere to the cutter. Therefore, there is considerable risk that the pressure relief valves become clogged and consequently do not open at their nominal pressure.

Other prior art devices of this kind are often subjected to disadvantages such as it not being possible to refill additional grease after a period of use of the cutter or it being impossible to avoid air pockets during refill, whereby the air content in the grease system can be up to 15%.

### Objects of the present invention

An object of the present invention is to provide a cutter with pressure compensation that can be used under extreme tough working conditions, when the cutter is surrounded by fluid which pressurizes the seals in the cutter and when heat is generated inside the cutter and the grease expands.

Another object of the present invention is to provide an effective method to fill a grease system with grease to obtain a maximum coefficient of fullness, i.e. a minimum of air bubbles will remain in the system after filling.

These and other objects of the present invention are realized by a cutter, a holder and a method that have been given the characteristics of the appended claims.

### Short description of the drawings

Below, an embodiment of the cutter according to the present invention is described, reference being made to the accompanying drawings, wherein: Fig. 1 shows a cross-section through a cutter when grease is introduced in and in the vicinity of the bearing races of the cutter; Fig. 2 shows a cross-section through a cutter according to the invention when grease is introduced centrally into the cutter; Fig. 3 shows a cross-section through a flexible diaphragm of the cutter and Fig. 4 shows a cross-section through a cutter according to the invention, in an active position.

### Detailed description of the invention

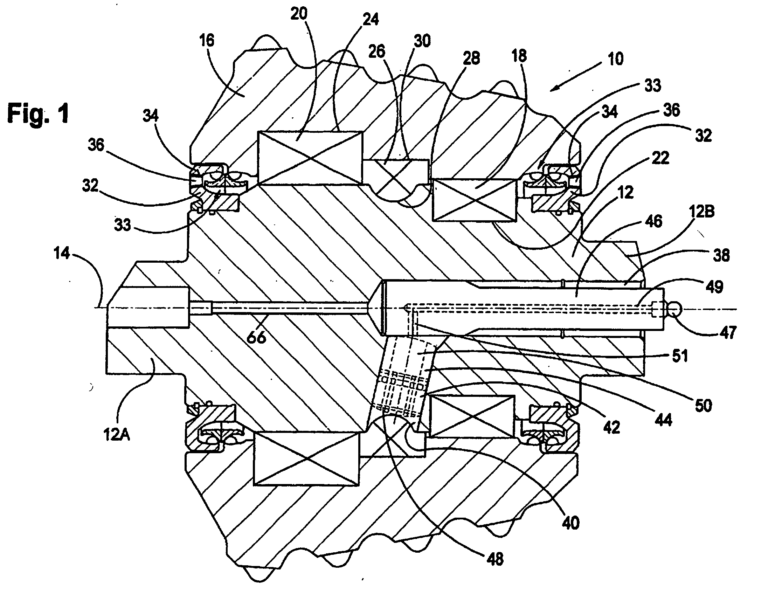

The cutter 10 according to Fig. 1 includes a shaft 12 having a longitudinal center axis 14. The ends 12A and 12B of the shaft 12 is to be mounted in a saddle (not shown), which is secured to the boring head. A roller body 16 is rotatably mounted on the shaft 12 via two sets of bearings 18 and 20, respectively. The bearings 18 are received in a first circumferential groove 22 formed in an outer periphery of the shaft 12, while the bearings 20 are received in a second circumferential groove 24 formed in an inner periphery of the roller body 16. The roller body 16 is locked axially relative to the shaft 12 by locking means 26, preferably including an annular row of balls 26 disposed in cooperation with third and fourth circumferential channels or grooves 28 and 30, formed respectively in the shaft 12 and in the roller body 16.

Between the axial ends of the roller body 16 and the shaft 12, the cutter 10 is provided with seal retainer means 32 supporting seals 33 that prevents grease from leaking out from the interior of the cutter 10. Both seal retainer means 32 are equipped with first relief holes 34 in which conical plugs 36 are mounted to prevent grease from leaking out through the holes 34. The function of the first relief holes 34 is explained more in detail below.

The cutter 10 according to Fig. 1 is provided with an axial bore 38 that extends from one end 12B of the shaft 12, i.e., in the disclosed embodiment from the end of the shaft 12 where the roller body 16 has its smallest diameter. The axial bore 38 extends about halfway of the length of the shaft 12. In the vicinity of the inner end of the bore 38, a generally radial bore 40 extends from the axial bore 38 to the third groove 28. The bore 40 is used to install the balls of the locking means 26. When the balls have been installed, a ball plug 42 and a spacer plug 44 are mounted in the bore 40. The plugs 42 and 44 together extend between the balls of the locking means 26 and a filling plug 46, which is inserted into the axial bore 38 by a slide fit. For access reasons the filling plug 46 extends out of the bore 38 and is provided with a grease nipple 47 and an internal axial feeding hole 49 that extends from the nipple 47 to the opposite end portion of the filling plug 46. A radially extending discharge hole 51 emanates from the feeding hole 49 and perforates the envelope surface of the filling plug 46.

The ball plug 42 is provided with two axially extending holes 48 which are offset from the longitudinal center axis of the ball plug 42, while the spacer plug 44 is provided with one axially extending central hole 50. The reason why the holes 48 of the ball plug 42 are offset from the axis of the plug 42 is to prevent the area of contact between the balls of the locking means 26 and the ball plug from blocking the entry of grease into the locking means 26 and further into the bearings 18, 20.

In Fig. 1 the cutter 10 is shown in a first postion for being greased or regreased. It should be noted that greasing takes place in two separate steps. The filling plug 46 is inserted into the axial bore 38 of the shaft 12. A grease gun (not shown) is attached to the grease nipple 47 and grease is pumped into the cutter by the grease gun. Thereby grease is forced through the channels 49 and 51 in the filling plug such that grease is forced out through an orifice in the plug and into the races 28 and 30, between the shaft 12 and the hub 16 carrying the balls 26. The filling plug has such geometry that it together with the bore prevents axial flow of grease and therefore the plug will not be subjected to axial reactional forces during filling. The first relief holes 34 are used to control the level of the grease inside the cutter 10. That is, excess grease is forced through the holes 34 when the first step of filling is completed. Then the filling plug is retracted from the bore and the bore is left substantially grease-free. The conical plugs 36 are mounted in the first relief holes 34 when the first step of greasing or regreasing is completed.

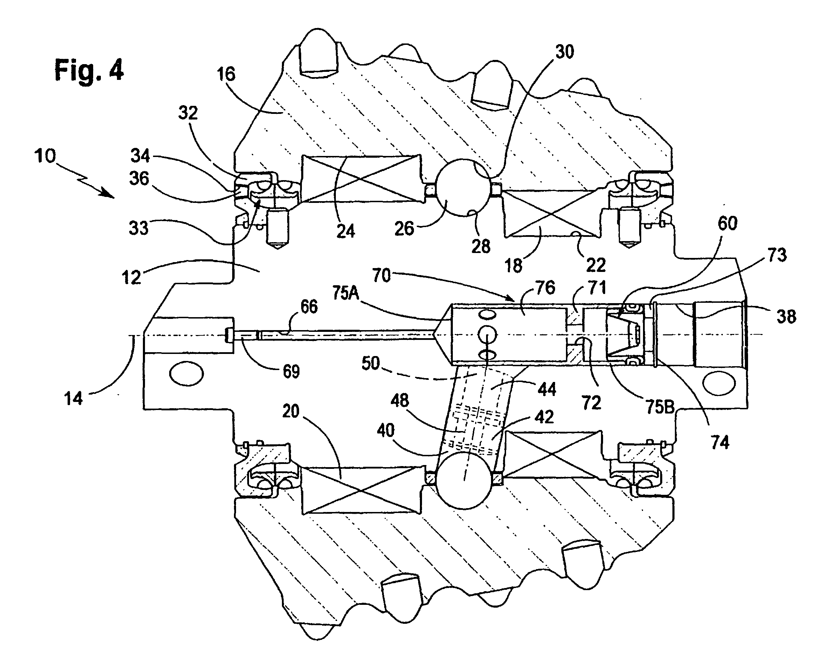

A device or a retainer 70 for the plug 44, see for instance Fig. 4, which has a shorter length than the filling plug 46, is inserted into the bore 38. The retainer 70 for the spacer plug 44 is arranged in the bore 38 and is mounted with clearance fit in the bore. The retainer 70 includes a cylinder, which is substantially thin walled in order to contain much grease primarily internally but is preferably surrounded by grease due to the clearance fit. The retainer has an inwardly extending flange 71. The flange has two objects, to strengthen the retainer and to stop the flexible diaphragm 60, see below, such that the yield point of the diaphragm cannot be reached at high external pressures. A central hole 72 is provided in the flange to allow passage of grease. A number of holes 77 are arranged in the retainer in the vicinity of the bore 40 to allow communication between the bore 40 and an internal space 76 of the retainer.

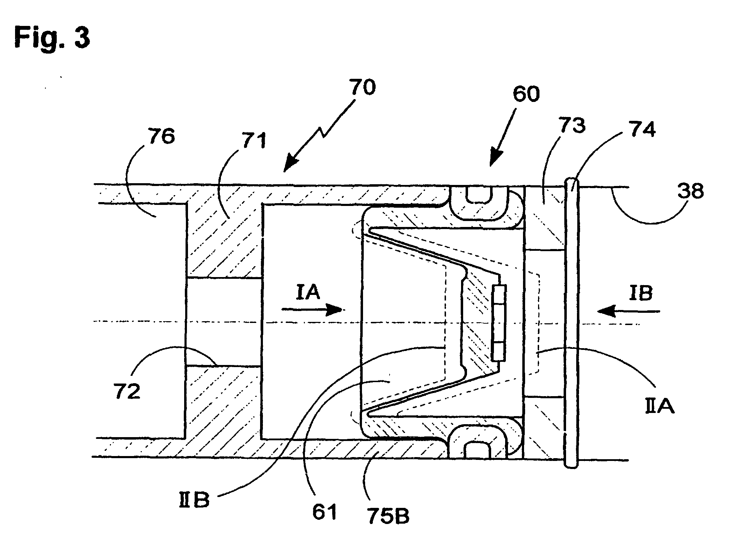

A bellows or flexible diaphragm 60 in Fig. 3, known per se, is provided after the retainer 70 in the bore 38. The diaphragm has a circular basic shape and its largest diameter corresponds substantially to the diameter of the bore 38. In the mounted position the diaphragm has the same diameter as the part of the bore which holds the retainer. One end 75A of the retainer is brought into contact with the bottom of the bore and the diaphragm is brought against the other end 75B of the retainer. Then these are secured against axial displacement by means of a centrally hollow washer 73 and a snap ring 74. The diaphragm preferably projects axially a distance into the retainer. The diaphragm is provided to level the pressure differences that develop during temperature increases in the grease or during shaft sinking of holes filled with deep water. The diaphragm separates the grease from the fluid in the bore hole, which enters into the outer orifice of the bore 38 and through the snap ring 74 and the washer 73. The retainer 70, the grease channel 66 and the diaphragm 60 are provided in the shaft 12, substantially concentrically with the center axis 14.

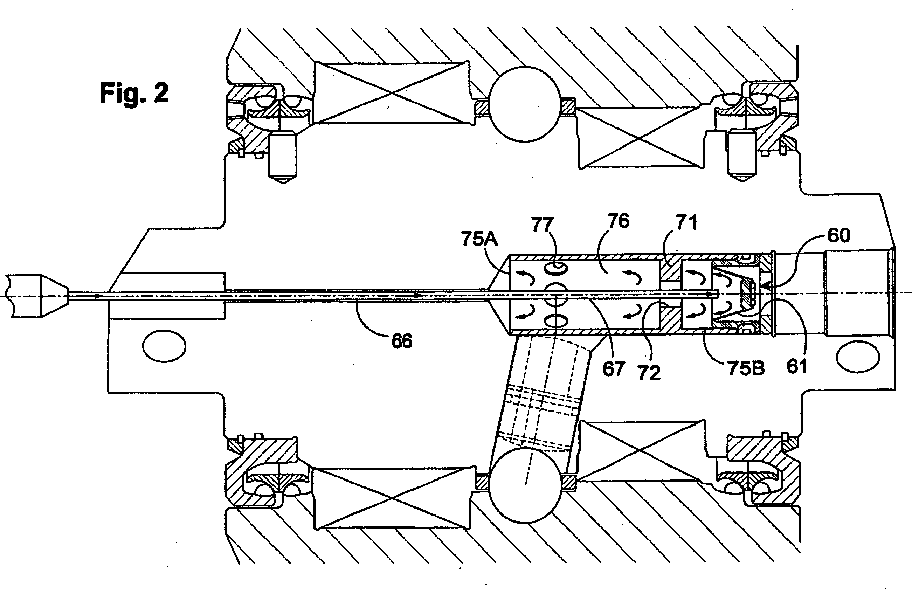

The cutter 10 is shown in Fig. 2 during the second step of greasing or regreasing. A nozzle 67 of a grease gun is inserted in and through the channel 66 and through the central hole 72, whereafter the free end of the nozzle is positioned at or in the vicinity of the movable part 61 of the flexible diaphragm. A precondition for filling is that the grease channel 66, the retainer 70 and the diaphragm 60 are substantially concentrical with the center axis 14. Then grease is pumped inwardly such that it fills the part 61 whereafter as the space around the free end of the nozzle is filled, a counter-pressure is created on the nozzle 67 and the nozzle is pushed outwardly. The operator of the grease gun then realizes that the inner parts of the bore are filled and thus releases the feed pressure on the gun such to allow the gun to be pushed back by the grease during continous filling of grease, i.e. the reactional forces from the grease on the nozzle control the retraction speed of the nozzle.

The nozzle 67 is removed when it has been fully pushed out of the grease channel 66, which is now filled. The channel is then sealed by a screw 69 or a similar seal means, see Fig. 4. The complete grease system contains less than 5 % air.

The cutter 10 according to the present invention functions in the following way. When a cutter 10 is set under working conditions it rotates and is subjected to heavy loads. This means in a first case, that friction generates heat in the bearings 18,20 and the locking means 26 of the cutter 10 and consequently also the grease is heated and expands or in a second case, that the grease is compressed due to the high external pressure from the fluid in the bore hole.

In the first case, when the grease is heated, it expands and since the seal retainers 32 prevent grease from leaking out between the roller body 16 and the shaft 12, the grease will push the movable part 61 of the diaphragm in the direction of the arrow IA in Fig. 3 to the position IIA. In the second case the cutter is surrounded by fluid under a relatively high pressure and therefore the volume of the grease system will diminish due to displacement of the part 61 in the direction of the arrow IB to the position IIB to achieve the same internal pressure as externally. These movements of the part 61, the change of the internal volume in both cases, occur continously during the drilling or during sinking into fluid and the positions shown in Fig. 3 shall be seen as examples only. Essentially less or larger changes in volume are possible, such as for instance a volume change in the interval ± 5 % relative to the original volume. It is often advantageous to fill at least the diaphragm with grease before mounting and then completely fill by means of the nozzle 67.

It is possible to practice the invention in connection with raise boring, cutters/discs for tunnel boring heads or shaft sinking.

## Claims

1. Cutter for a boring head, preferably a boring head for shaft drilling, wherein the cutter (10) is rotatably mounted, via a shaft (12) of the cutter (10), in a saddle secured to the boring head and wherein bearings (18,20) are provided between the shaft (12) and an outer roller body (16) of the cutter (10) to make it possible for the roller body (16) to rotate relative to the shaft (12), wherein seals (33) are disposed between the shaft (12) and the roller body (16) and wherein the shaft includes a first bore (38) extending inwardly into the shaft from an outer surface of the shaft (12), and a second bore (40) extends from the first bore to the envelope surface of the shaft, and wherein channels (48,50,66) are provided to introduce lubrication internally into the cutter (10), said shaft (12) having a center axis (14), said roller body (16) being axially locked relative to the shaft (12) by locking means (26),
**characterized in that** a device (70) for retaining of spacer means (42,44) that are located between the device (70) and the axial locking means (26) for the roller body (16), a lubrication channel (66) and a diaphragm (60) are provided in the shaft (12), substantially concentrically with the center axis (14), said device, channel and diaphragm being provided to accomodate lubrication and that a space (76) inside the device (70) communicates with the bearings (18,20) via the spacer means (42,44).

2. Cutter according to claim 1,
**characterized in that** the device (70) is substantially cylindrically tube shaped and provided with an intermediate portion (71) having a reduced diameter hole compared to the rest of the device (70).

3. Cutter according to claim 2,
**characterized in that** the device (70) at one (75B) of its ends is provided with a pressure relief diaphragm (60), that is communicating with the space (76) via a hole (72).

4. Cutter according to claim 3,
**characterized in that** the device (70), the diaphragm (60), a hollow washer (73) and a locking ring (74) are inserted into the first bore (38) in successive order, said diaphragm abutting against one end (75B) of the device and preferably projecting axially a distance into the device.

5. Cutter according to any of the preceding claims,
**characterized in that** the device (70) is mounted in the first bore (38) by a clearance fit.

6. A method of filling lubrication into a cutter (10), which is rotatably mounted, via a shaft (12) of the cutter (10), in a saddle secured to a boring head,
**characterized in that** the method comprises the steps of:
- inserting a filling plug (46) into an axial first bore (38) of said shaft (12),
- forcing lubrication through channels (49,51) of the filling plug so that lubrication exits an outlet of the plug and enters into a bearing means (28,30) disposed between the shaft (12) and a roller body (16) and in which bearings (18,20) are disposed,
- removing the filling plug (46) from the bore, leaving the first bore generally lubrication-free,
- installing in succession a substantially cylindrically tube shaped device (70) and a diaphragm (60) into the first bore and locking these axially in the bore,
- inserting a nozzle (67) in a channel (66), which communicates with the bore, in the shaft (12),
- forcing lubrication into an internal space (76) of the tube shaped device (70),
- removing the nozzle and sealing the channel.

7. Method according to claim 6,
**characterized in that** filling of lubrication first takes place in the area of the diaphragm (60) and then successively in direction towards the outer end of the channel (66) and that the nozzle is removed relatively slowly during substantially continously filling of lubrication.

## Patentansprüche

1. Schneidelement für einen Bohrkopf, vorzugsweise einen Bohrkopf für das Schachtbohren, wobei das Schneidelement (10) über eine Welle (12) des Schneidelements (10) drehbar in einem Sattel angebracht ist, der an dem Bohrkopf befestigt ist, wobei Lager (18, 20) zwischen der Welle (12) und einem äußeren Rollkörper (16) des Schneidelements (10) vorgesehen sind, um es dem Rollkörper (16) zu ermöglichen, relativ zur Welle (12) zu rotieren, wobei Dichtungen (33) zwischen der Welle (12) und dem Rollkörper (16) angeordnet sind, die Welle eine erste Bohrung (38), die sich von einer äußeren Oberfläche der Welle (12) in die Welle hinein erstreckt, und eine zweite Bohrung (40) aufweist, die sich von der ersten Bohrung zu der Hüllfläche der Welle erstreckt, wobei Kanäle (48, 50, 66) vorgesehen sind, um Schmiermittel innen in das Schneidelement (10) einzuführen, und wobei die Welle (12) eine Mittelachse (14) hat und der Rollkörper (16) relativ zu der Welle (12) durch Sperrmittel (26) axial festgehalten ist, **dadurch gekennzeichnet, daß** eine Vorrichtung (70) zum Halten von Abstandsmitteln (42, 44), die zwischen der Vorrichtung (70) und dem axialen Sperrmittel (26) für den Rollkörper (16) angeordnet sind, ein Schmiermittelkanal (66) und eine Membran (60) in der Welle (12) im wesentlichen konzentrisch zu der Mittelachse (14) vorgesehen sind, daß die Vorrichtung, der Kanal und die Membran vorgesehen sind, um Schmiermittel aufzunehmen, und daß ein Raum (76) innerhalb der Vorrichtung (70) über die Abstandsmittel (42, 44) mit den Lagem (18, 20) in Verbindung steht.

2. Schneidelement nach Anspruch 1, **dadurch gekennzeichnet, daß** die Vorrichtung (70) im wesentlichen die Form eines zylindrischen Rohres hat und mit einem Zwischenabschnitt (71) versehen ist mit einem Loch mit im Vergleich zu dem Rest der Vorrichtung (70) reduziertem Durchmesser.

3. Schneidelement nach Anspruch 2, **dadurch gekennzeichnet, daß** die Vorrichtung (70) an einem (75B) ihrer Enden mit einer Druckentlastungsmembran (60) versehen ist, die über ein Loch (72) mit dem Raum (76) in Verbindung steht.

4. Schneidelement nach Anspruch 3, **dadurch gekennzeichnet, daß** die Vorrichtung (70), die Membran (60), eine hohle Zwischenscheibe (73) und ein Sperring (74) in die erste Bohrung (38) nacheinander eingeführt sind und daß die Membran gegen ein Ende (75B) der Vorrichtung anstößt und vorzugsweise axial um einen Abstand in die Vorrichtung hineinragt.

5. Schneidelement nach einem der vorhergehenden Ansprüche, **dadurch gekennzeichnet, daß** die Vorrichtung (70) mit Spielpassung in der ersten Bohrung (38) angebracht ist.

6. Verfahren zum Einfüllen von Schmiermittel in ein Schneidelement (10), welches über eine Welle (12) des Schneidelements (10) in einem Sattel drehbar angebracht ist, der an einem Bohrkopf befestigt ist, **dadurch gekennzeichnet, daß** das Verfahren folgende Schritte aufweist:
- Einführen eines Füllstopfens (46) in eine axiale erste Bohrung (38) der Welle (12),
- Hindurchdrücken von Schmiermittel durch Kanäle (49, 51) des Füllstopfens, so daß Schmiermittel aus einem Auslaß des Stopfens austritt und in ein Lagermittel (28, 30) eintritt, welches zwischen der Welle (12) und einem Rollkörper (16) angeordnet ist und in welchen Lager (18, 20) angeordnet sind,
- Entfernen des Füllstopfens (46) aus der Bohrung und die erste Bohrung im allgemeinen schmiermittelfrei Belassen,
- danach Einbauen einer im wesentlichen zylinderrohrförmigen Vorrichtung (70) und einer Membran (60) in die erste Bohrung und axiales Festlegen derselben in der Bohrung,
- Einführen einer Düse (67) in einen Kanal (66) in der Welle (12), welcher mit der Bohrung in Verbindung steht,
- Hineindrücken von Schmiermittel in einen Innenraum (76) der rohrförmigen Vorrichtung (70),
- Entfernen der Düse und Abdichten des Kanals.

7. Verfahren nach Anspruch 6, **dadurch gekennzeichnet, daß** das Einfüllen von Schmiermittel im Bereich der Membran (60) erfolgt und dann nacheinander in Richtung zu dem äußeren Ende des Kanals (66) hin und daß die Düse während des im wesentlichen kontinuierlichen Einfüllens von Schmiermittel relativ langsam entfernt wird.

## Revendications

1. Dispositif de coupe destiné à une tête de forage, de préférence une tête de forage destinée à forer des puits, dans lequel le dispositif de coupe (10) est monté avec possibilité de rotation, par l'intermédiaire d'un arbre (12) du dispositif de coupe (10), dans une sellette fixée sur la tête de forage et dans lequel des paliers (18, 20) sont disposés entre l'arbre (12) et un corps de molette extérieur (16) du dispositif de coupe (10) afin de parvenir à ce que le corps de molette (16) tourne par rapport à l'arbre (12), dans lequel des joints d'étanchéité (33) sont disposés entre l'arbre (12) et le corps de molette (16), et dans lequel l'arbre comprend un premier alésage (38) s'étendant vers l'intérieur dans l'arbre depuis une surface extérieure de l'arbre (12), et un second alésage (40) s'étend du premier alésage à la surface d'enveloppe de l'arbre, et dans lequel des canaux (48, 50, 66) sont prévus afin d'introduire un graissage à l'intérieur du dispositif de coupe (10), ledit arbre (12) présentant un axe central (14), ledit corps de molette (16) étant bloqué axialement par rapport à l'arbre (12) par un moyen de blocage (26),
**caractérisé en ce qu'**un dispositif (70) destiné à la retenue de moyens d'espacement (42, 44) qui sont situés entre le dispositif (70) et le moyen de blocage axial (26) pour le corps de molette (16), un canal de graissage (66) et un diaphragme (60) sont disposés dans l'arbre (12), pratiquement de façon concentrique à l'axe central (14), lesdits dispositif, canal et diaphragme étant agencés pour recevoir un graissage et **en ce qu'**un espace (76) à l'intérieur du dispositif (70) communique avec les paliers (18, 20) par l'intermédiaire des moyens d'espacement (42, 44).

2. Dispositif de coupe selon la revendication 1,
**caractérisé en ce que** le dispositif (70) est sensiblement en forme de tube cylindrique et est muni d'une partie intermédiaire (71) comportant un trou de diamètre réduit comparé au reste du dispositif (70).

3. Dispositif de coupe selon la revendication 2,
**caractérisé en ce que** le dispositif (70) au niveau de l'une (75B) de ses extrémités est muni d'un diaphragme de décharge de pression (60), qui communique avec l'espace (76) par l'intermédiaire d'un trou (72).

4. Dispositif de coupe selon la revendication 3,
**caractérisé en ce que** le dispositif (70), le diaphragme (60), une rondelle creuse (73) et une bague de blocage (74) sont insérés dans le premier alésage (38) dans cet ordre successif, ledit diaphragme butant contre une extrémité (75B) du dispositif et dépassant de préférence axialement sur une certaine distance dans le dispositif.

5. Dispositif de coupe selon l'une quelconque des revendications précédentes,
**caractérisé en ce que** le dispositif (70) est monté dans le premier alésage (38) au moyen d'un ajustement avec jeu.

6. Procédé d'introduction de graissage dans un dispositif de coupe (10), lequel est monté avec possibilité de rotation, par l'intermédiaire d'un arbre (12) du dispositif de coupe (10), dans une sellette fixée sur une tête de forage,
**caractérisé en ce que** le procédé comprend les étapes consistant à :
- insérer un bouchon de remplissage (46) dans un premier alésage axial (38) dudit arbre (12),
- faire pénétrer de force le graissage au travers de canaux (49, 51) du bouchon de remplissage de sorte que le graissage sorte d'une sortie du bouchon et pénètre dans des moyens de paliers (28, 30) disposés entre l'arbre (12) et un corps de molette (16) et dans lesquels des paliers (18, 20) sont disposés,
- enlever le bouchon de remplissage (46) de l'alésage, en laissant le premier alésage pratiquement sans graissage,
- installer à la suite un dispositif sensiblement en forme de tube cylindrique (70) et un diaphragme (60) dans le premier alésage et bloquer ceux-ci axialement dans l'alésage,
- insérer une buse (67) dans un canal (66), qui communique avec l'alésage, dans l'arbre (12),
- faire pénétrer de force le graissage dans un espace interne (76) du dispositif en forme de tube (70),
- enlever la buse et fermer hermétiquement le canal.

7. Procédé selon la revendication 6,
**caractérisé en ce que** l'introduction de graissage a lieu tout d'abord dans la région du diaphragme (60) et ensuite successivement dans la direction vers l'extrémité extérieure du canal (66), et **en ce que** la buse est enlevée relativement lentement durant l'introduction pratiquement en continu du graissage.
